# EUROPÄISCHE PATENTANMELDUNG

(11) **EP 0 767 541 A2**
(43) Veröffentlichungstag der Anmeldung: **09.04.1997**
(21) Anmeldenummer: 96202757.9
(22) Anmeldetag: 03.10.1996
(51) Int. Cl.: H04B 1/08

(54) **Autoradio mit einer elektronischen Diebstahlsicherung**

(30) Priorität: 07.10.1995 DE 19537419
(71) Anmelder: Philips Patentverwaltung GmbH, 22335 Hamburg (DE); PHILIPS ELECTRONICS N.V., 5621 BA Eindhoven (NL)
(72) Erfinder: Dünnebacke, Joachim, c/o Philips Patent. GmbH, 22335 Hamburg (DE)
(74) Vertreter: Peters, Carl Heinrich, Dipl.-Ing.

(57) **Zusammenfassung**

Beschrieben wird ein Autoradio mit einer elektronischen Diebstahlsicherung, die Mittel zur elektrischen Erfassung der Entnahme des Autoradios aus seinem Einbauort aufweist und durch die die Funktion des Autoradios verhindert wird, so lange nach der Entnahme die Diebstahlsicherung nicht deaktiviert wird.

Eine einfache Anordnung mit einer sehr sicheren Funktionsweise wird dadurch erhalten, daß die Mittel zur elektrischen Erfassung der Entnahme des Autoradios eine Überwachungsschaltung umfassen, durch die eine fortlaufende Überwachung des Vorhandenseins einer Verbindung des Autoradios mit wenigstens einem Lautsprecher erfolgt und von der unmittelbar durch die Unterbrechung dieser Verbindung die Diebstahlsicherung aktiviert wird.

## Beschreibung

Die Erfindung bezieht sich auf ein Autoradio mit einer elektronischen Diebstahlsicherung, die Mittel zur elektrischen Erfassung der Entnahme des Autoradios aus seinem Einbauort aufweist und durch die die Funktion des Autoradios verhindert wird, so lange nach der Entnahme die Diebstahlsicherung nicht deaktiviert wird.

Aus der DE-PS 37 17 054 ist ein Autoradio mit einer elektronischen Diebstahlsicherung bekannt, die einen Speicher für ein Codewort, Mittel zur Eingbe des Codewortes sowie Mittel zur elektrischen Erfassung einer Entnahme des Autoradios aus seinem Einbauort aufweist, welche die Funktion des Autoradios verhindern, so lange nach der Entnahme das Codewort nicht eingegeben wurde. Um eine rein elektronische Diebstahlsicherung zu schaffen, die weder mit einer zusätzlich angeklemmten Batterie zu überlisten ist noch die Benutzung eines eine Schaltungsanordnung aktivierenden elektronischen Schlüssels erfordert, ist bei dem bekannten Autoradio eine Schaltungsanordnung vorgesehen, die beim Einschalten des Gerätes die Impedanz an mindestens einer Anschlußklemme des Autoradios mißt, den gemessenen Impedanzwert mit dem zuvor am Einbauort ermittelten gespeicherten Impedanzwert vergleicht und beim Auftreten unterschiedlicher Werte die Funktion des Autoradios bis zur Eingabe des richtigen Codewortes unterbindet. Bevorzugt wird dabei die Impedanzmessung an mindestens einer Lautsprecheranschlußklemme durchgeführt, wobei zur Messung der Impedanz ein in einem Wechselspannungsgenerator erzeugtes Signal über einen Schalter an die Lautsprecheranschlußklemme gelegt wird. Aus der Meßspannung an der Lautsprecheranschlußklemme und aus dem im Lautsprecherkreis fließenden Wechselstrom wird dann der Impedanzwert an der Lautsprecheranschlußklemme ermittelt.

Bei diesem Autoradio soll nach dessen Einbau das Codewort eingegeben und gleichzeitig der an der Lautsprecherklemme vorhandene Impedanzwert als digitaler Wert in den Speicher eingeschrieben werden. Dazu wird der mit der genannten Schaltungsanordnung ermittelte Impedanzwert über einen A/D-Wandler einem Microprozessor zugeführt und von diesem in den Speicher eingeschrieben. Bei erneuter Inbetriebnahme des Autoradios wird vom Microprozessor der an der Lautsprecherklemme vorhandene Impedanzwert mit dem bei der ersten Inbetriebnahme im Speicher abgelegten Impedanzwert verglichen. Bei Übereinstimmung wird der Betrieb des Autoradios aufgenommen. Bei Nichtübereinstimmung wird die Funktion des Autoradios verhindert und der Benutzer zur Eingabe des Codewortes veranlaßt. Im Falle einer berechtigten Entnahme des Autoradios aus dem Fahrzeug soll damit die Wiederaufnahme des Betriebes auch beispielsweise mit anderen Lautsprechern durch die Eingabe des Codewortes ermöglicht sein.

Abgesehen von einem nicht unbeträchtlichen Schaltungsaufwand für die Impedanzmessung, die Abspeicherung des gemessenen Impedanzwertes und den Vergleich eines erneut gemessenen Impedanzwertes mit dem gespeicherten Impedanzwert zeigt sich, daß auch diese Diebstahlsicherung keine zufriedenstellende Schutzfunktion ausübt. So ist es auch bei unberechtigter Entnahme des Autoradios möglich, den Zwang zur Eingabe des Codewortes zu umgehen, wenn vor der erneuten, diesmal unberechtigten Inbetriebnahme beispielsweise Lautsprecher angeschlossen werden, deren elektrische Kennwerte mit denjenigen aus dem Fahrzeug des berechtigten Benutzers übereinstimmen. Eine solche Umgehung der Diebstahlsicherung kann dadurch erleichtert werden, daß beispielsweise die Impedanzwerte von Lautsprechern für Autoradios genormt sind. Um ein derartiges Umgehen der Diebstahlsicherung auszuschließen, müßte mit einer entsprechend aufwendigen Impedanzmessung ein Impedanzwert mit hoher Auflösung bestimmt werden. Dies kann aber dazu führen, daß bereits unterschiedliche Übergangswiderstände an der Anschlußklemme auch beim berechtigten Benutzer zum Auslösen der Diebstahlsicherung führen. Damit erschwert sich auch für den berechtigten Benutzer die Handhabung des Autoradios; insbesondere wird sie von für ihn unwägbaren Schwankungen physikalischer Parameter beeinträchtigt.

In diesem Fall weist das in der DE-PS 37 17 54 beschriebene Autoradio keinen Vorteil gegenüber einem Autoradio auf, bei dem grundsätzlich nach jeder Trennung beispielsweise von der Kraftfahrzeugbatterie eine Eingabe des Codewortes erforderlich ist. Aber auch eine Blockierung des Autoradios bei Unterbrechung der Betriebsspannung aus der Kraftfahrzeugbatterie ist trotz einfacher Ausführbarkeit wenig vorteilhaft, da sie in den Fällen nutzlos ist, in denen das Autoradio mit angeschlossener Spannungsversorgung entwendet wird. Außerdem hat es sich gezeigt, daß die Blockierung der letztgenannten Art Schwierigkeiten z.B. bei sogenannten Start- oder "Load dump"-Vorgängen bereitet. Auch kann die Aktivierung der Diebstahlsicherung, d.h. die Blockierung des Autoradios, durch Spannungsspeicherung in Kondensatoren innerhalb des Autoradios so stark verlangsamt werden, daß sie in bestimmten Fällen störbar oder verhinderbar ist bzw. gestört wird.

Die Erfindung hat die Aufgabe, ein Autoradio mit einer schnell und sicher aktivierbaren Diebstahlsicherung zu schaffen.

Erfindungsgemäß wird diese Aufgabe bei einem Autoradio der gattungsgemäßen Art dadurch gelöst, daß die Mittel zur elektrischen Erfassung der Entnahme des Autoradios eine Überwachungsschaltung umfassen, durch die eine fortlaufende Überwachung des Vorhandenseins einer Verbindung des Autoradios mit wenigstens einem Lautsprecher erfolgt und von der unmittelbar durch die Unterbrechung dieser Verbindung die Diebstahlsicherung aktiviert wird.

Auch die Erfindung macht sich die Tatsache zunutze daß bei der Entnahme des Autoradios deren Verbindung mit dem bzw. den Lautsprecher(n) unterbrochen wird. Im Gegensatz zum Stand der Technik gemäß DE-PS 37 17 054 wird bei der Erfindung die Diebstahlsicherung jedoch schon unmittelbar bei der Entnahme des Autoradios aktiviert. Damit wird einerseits die Sicherheit erhöht, da die Zeitspanne für mögliche Manipulationen an der Diebstahlsicherung entscheidend verkürzt wird, und zwar um die Zeitspanne, während der das Autoradio sich außerhalb seines Einbauortes befindet. Weiterhin wird bei der Erfindung eine dauernde Überprüfung der Lautsprecherverbindung vorgenommen, die sich unterbrechungslos über die gesamte Zeit erstreckt, während der das Autoradio sich am Einbauort befindet. Bei Entnahme vom Einbauort führt diese Überwachung zwangsläufig zur Aktivierung der Diebstahlsicherung; eine Deaktivierung der Diebstahlsicherung ist durch die Überwachungsschaltung bzw. die Mittel zur elektrischen Erfassung der Entnahme des Autoradios nicht vorgesehen. Auch durch Wiederherstellung exakt übereinstimmender Anschlußbedingungen kann somit nach Entnahme des Autoradios die Diebstahlsicherung nicht mehr umgangen werden. Beim erfindungsgemäßen Autoradio erfolgt außerdem eine sofortige, nicht durch Energiespeicher im Autoradio verzögerte oder gestörte Reaktion auf die Entnahme. Auch Schwierigkeiten mit einer Aktivierung bei Start- oder "Load dump"-Vorgängen treten nicht mehr auf.

Einer Fortbildung der Erfindung liegt die Erkenntnis zugrunde, daß bei allen in Verbindung mit Autoradios verwendeten Anordnungen von Lautsprechern über diese ausgehend von den Anschlüssen des Autoradios stets eine galvanische Verbindung über die Lautsprecherschwingspulen hergestellt wird. Diese galvanische Verbindung kann nun sehr einfach mit einem Konstantstrom beaufschlagt und überwacht werden. Die durch diesen Konstantstrom an der galvanischen Verbindung entstehende Spannung, die einen verhältnismäßig niedrigen Wert annimmt, wird als Signal für das Vorhandensein der Verbindung gewertet. Wird dagegen die galvanische Verbindung unterbrochen, steigt die genannte Spannung an; dies wird als Signal für die Unterbrechung und damit die Entnahme des Autoradios vom Einbauort erkannt. Damit ist eine aufwendige Impedanzmessung nicht erforderlich; die beschriebene Prüfung der Verbindung kann zeitkontinuierlich sehr einfach mit einer einfachen, analogen Komparatorstufe durchgeführt werden. Für diese Komparatorstufe ist eine Spannungsschwelle vorgebbar, bei deren Überschreiten durch die Spannung an der Verbindung des Autoradios mit dem (den) Lautsprecher(n) eine Unterbrechung dieser Verbindung angenommen bzw. durch sie detektiert wird.

Die Überwachungsschaltung des erfindungsgemäßen Autoradios kann in einfacher Weise für eine zusätzliche Aktivierung der Diebstahlsicherung bei jedem außer Betrieb nehmen des Autoradios eingesetzt werden, bei dem das Autoradio im übrigen an seinem Einbauort verbleibt (ohne Trennung der Verbindungen). Dafür ist der Überwachungsschaltung zusätzlich ein Signal zuführbar, das eine Information darüber enthält, ob das Autoradio eingeschaltet ist oder nicht, und durch das beim Ausschalten des Autoradios die Diebstahlsicherung aktiviert wird.

Auch beim erfindungsgemäßen Autoradio kann vorzugsweise die Diebstahlsicherung durch Zuführen eines ein Codewort enthaltenden Signals deaktivierbar sein. Insoweit fügt sich die Erfindung in die diesbezüglich übliche Technik ein.

Im übrigen sind in den Unteransprüchen weitere vorteilhafte Ausgestaltungen der Erfindung wiedergegeben.

Ein Ausführungsbeispiel ist in der Zeichnung dargestellt und wird im nachfolgenden näher erläutert. Dabei zeigen
Fig. 1 gängige Möglichkeiten der Verbindung zwischen einem Autoradio und einem oder mehreren Lautsprechern und
Fig. 2 eine Überwachungsschaltung gemäß der Erfindung.

Fig. 1a) zeigt ein grobes Prinzipschaltbild der Verbindung zwischen einem Autoradio 1 und einem Lautsprecher 2 über zwei Anschlüsse 3, 4. Das Autoradio 1 enthält eine Brückenendstufe mit einem nicht invertierenden und einem invertierenden Ausgangsverstärker 5 bzw. 6, deren Ausgänge die Anschlüsse 3 bzw. 4 bilden.

Zwischen den Anschlüssen 3 und 4 besteht über die Lautsprecherschwingspule des Lautsprechers 2 eine galvanische Verbindung.

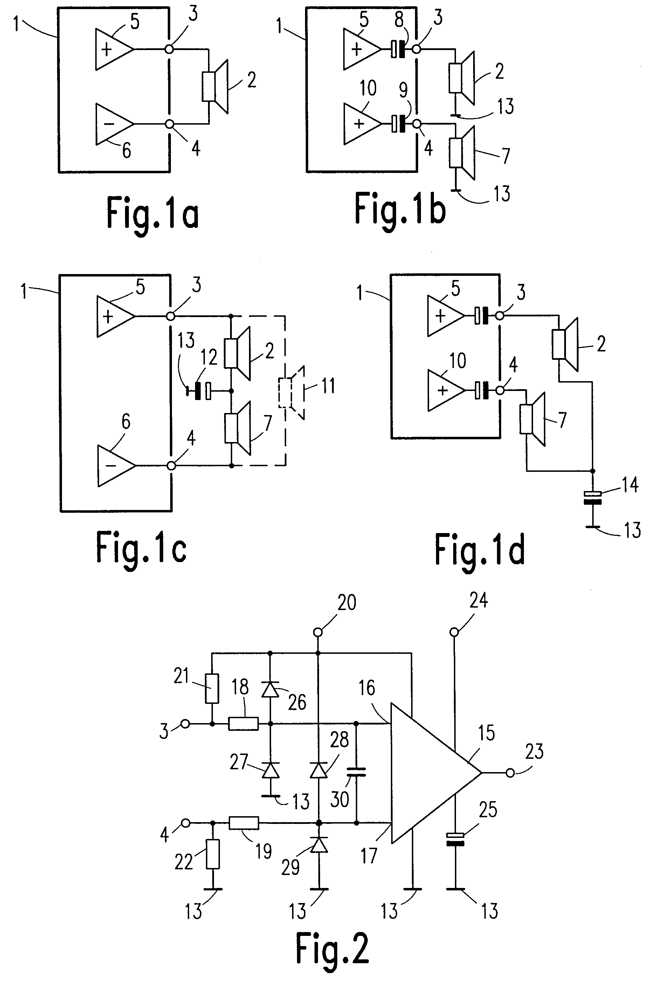

In Fig. 1b), in der wie auch im nachfolgenden übereinstimmende Elemente wieder mit denselben Bezugszeichen versehen sind, ist eine Stereoendstufe mit außer dem ersten Lautsprecher 2 einem zweiten Lautsprecher 7 dargestellt. Die Lautsprecher sind von den Anschlüssen 3 bzw. 4 gegen Masse geschaltet. Somit besteht zwischen den Anschlüssen 3 und 4 über die Lautsprecherschwingspulen der Lautsprecher 2 und 7 und Masse eine galvanische Verbindung. Diese wird auch nicht dadurch beeinträchtigt, daß zwischen dem Ausgang des nicht invertierenden Ausgangsverstärker 5 und dem Anschluß 3 ein Kondensator 8, bevorzugt ein Elektrolytkondensator angeordnet ist. Ein weiterer Kondensator 9 verbindet den Anschluß 4 mit dem Ausgang eines zweiten nicht invertierenden Ausgangsverstärkers 10, der den zweiten Lautsprecher 7 speist.

Fig. 1c) zeigt eine umsteckbare Endstufe für ein Autoradio, an die wahlweise eine Reihenschaltung aus zwei Lautsprechern 2, 7 oder ein einzelner Lautsprecher 11 (in jedem Fall über die Anschlüsse 3, 4) angeschlossen werden kann. Dabei ist wahlweise - wie in Fig. 1c) dargestellt - der Verbindungspunkt zwischen den Lautsprechern 2 und 7 über einen Kondensator 12, bevorzugt einen Elektrolytkondensator, mit Masse 13 verbunden. Der Anschluß 3 wird wieder durch den Ausgang eines nicht invertierenden Ausgangsverstärkers 5, der Anschluß 4 durch den Ausgang eines invertierenden Ausgangsverstärkers 6 gebildet.

Fig. 1d) zeigt eine Endstufe für zwei Lautsprecher 2, 7, die einerseits mit je einem der Anschlüsse 3, 4 und andererseits gemeinsam über einen Kondensator 14 (Auskoppel-Elektrolytkondensator) mit Masse 13 verbunden sind. Der Anschluß 3 wird durch den Ausgang eines ersten nicht invertierenden Ausgangsverstärkers 5, der Anschluß 4 durch den Ausgang eines weiteren nicht invertierenden Ausgangsverstärkers 10 gebildet. In den Fig. 1c) und 1d) sind die Lautsprecher 2, 7 zwischen den Anschlüssen 3 und 4 unmittelbar in Reihe angeordnet; ihre Lautsprecherschwingspulen stellen die galvanische Verbindung zwischen den Anschlüssen 3, 4 her.

In jedem der in Fig. 1 dargestellten Fälle führt eine Unterbrechung der Verbindung zwischen dem Autoradio 1 und dem bzw. den Lautsprecher(n) 2, 7 bzw. 11 zu einer Unterbrechung der beschriebenen galvanischen Verbindung. Die Überprüfung dieser galvanischen Verbindung bzw. die Detektion ihrer Unterbrechung wird mit einer Überwachungsschaltung vorgenommen, deren wichtigste Elemente in Fig. 2 dargestellt sind. Die Anordnung nach Fig. 2 enthält eine Komparatorstufe 15 mit einem ersten Eingang (Plus-Eingang) 16, der über einen ersten Eingangswiderstand 18 mit dem Anschluß 3 verbunden ist, sowie mit einem zweiten Eingang (Minus-Eingang) 17, der über einen zweiten Eingangswiderstand 19 mit dem Anschluß 4 verbunden ist. Die Anschlüsse 3, 4 entsprechen dabei denjenigen aus der Fig. 1. Von einem Dauerstromversorgungsanschluß 20, der unmittelbar, d.h. ohne betriebliche Abschaltvorrichtung, mit einer Spannungsquelle, vorzugsweise der Kraftfahrzeugbatterie, verbunden ist, führt eine Verbindung über einen bevorzugt hochohmigen ersten Konstantstrom-Speisewiderstand 21 an den Anschluß 3. Ein zweiter Konstantstrom-Speisewiderstand 22 ist zwischen den Anschluß 4 und Masse 13 eingefügt. Aus dem Dauerstromversorgungsanschluß 20 wird auch die Komparatorstufe 15 mit Energie gespeist.

So lange sich das Autoradio an seinem Einbauort befindet, ist die beschriebene galvanische Verbindung über die Lautsprecher 2, 7 bzw. 11 vorhanden. Über diese und die Konstantstrom-Speisewiderstände 21, 22 fließt ein Konstantstrom zwischen dem Dauerstromversorgungsanschluß 20 und Masse 13. Dieser als Prüfstrom wirkende Konstantstrom ruft jedoch in der verhältnismäßig niederohmigen galvanischen Verbindung über die Lautsprecherschwingspulen nur eine sehr geringe Spannung hervor. In der Komparatorstufe 15 ist eine Schaltungsanordnung zur Bereitstellung einer Spannungsschwelle enthalten, die größer ist als die an der galvanischen Verbindung anstehende Spannung. Am Ausgang 23 der Komparatorstufe 15 wird dann ein logisches Signal mit einem hohen Pegel abgegeben, welches einer Diebstahlsicherung zugeführt werden kann und dieser einen einwandfreien Zustand der Lautsprecherverbindungen signalisiert. Wird nun die galvanische Verbindung zwischen den Anschlüssen 3 und 4 unterbrochen, steigt die Spannung zwischen den Eingängen 16 und 17 der Komparatorstufe 15 über die Spannungsschwelle an. Am Ausgang 23 der Komparatorstufe 15 erscheint dann ein niedriger logischer Pegel. Durch diesen wird die Diebstahlsicherung aktiviert. Sie ist bevorzugt in der Weise ausgebildet, daß auch ein erneutes Umschalten auf einen hohen logischen Pegel am Ausgang 23 nicht zu einer Deaktivierung führt. Diese kann bevorzugt erst durch Zuführen eines ein Codewort enthaltenden Signals an die Diebstahlsicherung vorgenommen werden.

Die beschriebene Anordnung mit der Komparatorstufe 15 ist daraufhin ausgelegt, daß übliche Ausgangsverstärker auch im sogenannten "Stand by"-Zustand mit einer Gleichspannung an ihren Ausgängen beaufschlagt werden können, die die Spannungsschwelle übersteigt, ohne daß dadurch eine merkliche Veränderung des Betriebszustands der Ausgangsverstärker eintritt.

Die Komparatorstufe 15 nach Fig. 2 ist mit einem Abschalteingang 24 ("Inhibit") versehen, über den der Komparatorstufe und damit der sie umfassenden Überwachungsschaltung zusätzlich ein Signal zuführbar ist, das eine Information darüber enthält, ob das Autoradio eingeschaltet ist oder nicht, beispielsweise ein aus der Versorgungsspannung für das Autoradio 1 hinter einem die Energiezufuhr für dieses schaltenden Ein-/Ausschalter abgeleitetes Signal. Wird über den Abschalteingang 24 das Abschalten des Autoradios 1 signalisiert, wird dadurch der Ausgang 23 der Komparatorstufe 15 ebenfalls auf niedrigen logischen Pegel umgeschaltet. Auch durch das Abschalten des Autoradios 1 wird somit die Diebstahlsicherung aktiviert.

Eine Aktivierung der Diebstahlsicherung kann mit der Schaltungsanordnung nach Fig. 2 auch beim Zusammenbrechen der Spannung am Dauerstromversorgungsanschluß 20 erfolgen, also beispielsweise bei einer Unterbrechung der Verbindung des Dauerstromversorgungsanschlusses 20 mit der Kraftfahrzeugbatterie. Um in diesem Fall noch ein sicheres Signal zur Aktivierung der Diebstahlsicherung über den Ausgang 23 abgeben zu können, kann die Komparatorstufe 15 mit einem Stützkondensator 25 verbunden sein, der in Fig. 2 andererseits gegen Masse 13 geschaltet ist. Dieser Stützkondensator 25, bevorzugt ein Elektrolytkondensator, stellt einen zusätzlichen Energiespeicher dar, der die Energiezufuhr zur von der Überwachungsschaltung umfaßten Komparatorschaltung 15, d.h. die Betriebsspannung an dieser, für einen bestimmten Zeitraum auch nach Wegfall der Versorgungsspannung am Autoradio 1 aufrecht erhält.

Dadurch ist mit geringem Aufwand auch eine Überwachung der Verbindung des Autoradios 1 mit der Kraftfahrzeugbatterie in die Diebstahlsicherung einbezogen.

Die Eingänge 16, 17 der Komparatorstufe 15 sind mit einer Überspannungs-Schutzanordnung verbunden, um Beschädigungen der Komparatorstufe 15 bei einem Betrieb des Autoradios 1 mit unterbrochenen Verbindungen zu den Lautsprechern 2, 7 bzw. 11 zu verhindern. Auch können an den Anschlüssen 3 und 4 je nach Konfiguration der anzuschließenden Lautsprecher 2, 7 bzw. 11 sehr unterschiedliche Spannungen auftreten. Die Überspannungs-Schutzanordnung umfaßt eine erste Diode 26 zwischen dem Dauerstromversorgungsanschluß 20 und dem ersten Eingang 16, eine zweite Diode 27 zwischen dem ersten Eingang 16 und Masse 13, eine dritte Diode 28 zwischen dem Dauerstromversorgungsanschluß 20 und dem zweiten Eingang 17 sowie eine vierte Diode 29 zwischen dem zweiten Eingang 17 und Masse 13. Die Eingangswiderstände 18 bzw. 19 bilden Strombegrenzungswiderstände für die Überspannungs-Schutzanordnung. Ein Kondensator 30 ist zwischen den Eingängen 16 und 17 angeordnet.

Die beschriebene Komparatorschaltung für das erfindungsgemäße Autoradio kann beispielsweise mit diskreten Bauelementen aufgebaut sein, als gesonderte integrierte Schaltung ausgestaltet oder als Bestandteil einer die Ausgangsverstärker 5, 6 bzw. 10 umfassenden Baugruppe ausgeführt sein.

Empfehlenswert ist eine störsichere Gestaltung und Verlegung der Verbindungsleitungen vom Autoradio 1 zu den Lautsprechern 2, 7 bzw. 11, um eine Beeinflussung der Überwachungsschaltung durch Einstreuen von Störungen zu vermeiden.

## Patentansprüche

1. Autoradio mit einer elektronischen Diebstahlsicherung, die Mittel zur elektrischen Erfassung der Entnahme des Autoradios aus seinem Einbauort aufweist und durch die die Funktion des Autoradios verhindert wird, so lange nach der Entnahme die Diebstahlsicherung nicht deaktiviert wird, dadurch gekennzeichnet,
daß die Mittel zur elektrischen Erfassung der Entnahme des Autoradios eine Überwachungsschaltung umfassen, durch die eine fortlaufende Überwachung des Vorhandenseins einer Verbindung des Autoradios mit wenigstens einem Lautsprecher erfolgt und von der unmittelbar durch die Unterbrechung dieser Verbindung die Diebstahlsicherung aktiviert wird.

2. Autoradio nach Anspruch 1, dadurch gekennzeichnet,
daß die Überwachungsschaltung Mittel zur Beaufschlagung der Verbindung des Autoradios mit dem (den) Lautsprecher(n) mit einem Konstantstrom aufweist sowie eine Komparatorstufe zum Prüfen einer durch den Konstantstrom an der Verbindung hervorgerufenen Spannung, wobei ein Überschreiten einer vorgebbaren Spannungsschwelle durch die Spannung an der Verbindung von der Komparatorstufe als Unterbrechung dieser Verbindung detektiert wird.

3. Autoradio nach Anspruch 1 oder 2, dadurch gekennzeichnet,
daß der Überwachungsschaltung zusätzlich ein Signal zuführbar ist, das eine Information darüber enthält, ob das Autoradio eingeschaltet ist oder nicht, und durch das beim Ausschalten des Autoradios die Diebstahlsicherung aktiviert wird.

4. Autoradio nach Anspruch 2 oder 3, dadurch gekennzeichnet,
daß die Komparatorstufe an ihren Eingängen, die der Zufuhr der durch den Konstantstrom an der Verbindung des Autoradios mit dem (den) Lautsprecher(n) hervorgerufenen Spannung dienen, eine Überspannungs-Schutzanordnung aufweist.

5. Autoradio nach einem der vorhergehenden Ansprüche, dadurch gekennzeichnet,
daß die Diebstahlsicherung in an sich bekannter Weise durch Zuführen eines ein Codewort enthaltenden Signals deaktivierbar ist.

6. Autoradio nach einem der vorhergehenden Ansprüche, dadurch gekennzeichnet,
daß die Überwachungsschaltung eine Energiezufuhr über einen zusätzlichen Energiespeicher umfaßt.
